(19) Europäisches Patentamt
European Patent Office
Office européen des brevets

(11) **EP 4 092 905 A1**

(12) **EUROPÄISCHE PATENTANMELDUNG**

(43) Veröffentlichungstag:
**23.11.2022 Patentblatt 2022/47**

(21) Anmeldenummer: **21174114.5**

(22) Anmeldetag: **17.05.2021**

(51) Internationale Patentklassifikation (IPC):
***H02P 25/14*** (2006.01)    ***B25F 5/00*** (2006.01)
***H02P 3/10*** (2006.01)

(52) Gemeinsame Patentklassifikation (CPC):
**H02P 25/14; B25F 5/00; H02P 3/10**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
- **Augustin, Christian**
  **86554 Pöttmes (DE)**
- **Zhang, Xiaodong**
  **81739 München (DE)**
- **Wißmach, Walter**
  **80637 München (DE)**

(74) Vertreter: **Hilti Aktiengesellschaft**
**Corporate Intellectual Property**
**Feldkircherstrasse 100**
**Postfach 333**
**9494 Schaan (LI)**

(54) **STEUERVERFAHREN ZUM ABBREMSEN EINES ELEKTROMOTORS**

(57) Steuerverfahren zum Abbremsen eines Elektromotors (7) einer elektrischen Handwerkzeugmaschine (1), der Elektromotor (7) umfassend eine Statorwicklung (12) und eine Rotorwicklung (14), wobei das Verfahren umfasst:

a) Schalten (S1) des Elektromotors (7) von einem Motorbetrieb in einen Bremsbetrieb,

b) Umpolen (S2) einer an der Rotorwicklung (14) anliegenden Eingangsspannung im Vergleich zum Motorbetrieb,

c) Begrenzen (S3) eines Rotorstroms ($I_R(t)$) der Rotorwicklung (14) in Abhängigkeit eines vorbestimmten Schwellwerts ($I_L$), und

d) Regeln (S4) eines Statorstroms ($I_S(t)$) der Statorwicklung (12) in Abhängigkeit einer aktuellen Drehzahl ($n(t)$) des Elektromotors (7).

Fig. 4

EP 4 092 905 A1

**Beschreibung**

GEBIET DER ERFINDUNG

Die vorliegende Erfindung betrifft ein Steuerverfahren zum Abbremsen eines Elektromotors, ein Steuerverfahren zum Steuern einer elektrischen Antriebseinheit sowie ein Computerprogrammprodukt.

Ein Bohrwerkzeug einer elektrischen Handwerkzeugmaschine, wie einer Bohrmaschine, kann sich beim Bohren in einen Untergrund in diesem verkeilen. Damit sich die Bohrmaschine zum Zeitpunkt des Verkeilens nicht um die eigene Achse dreht und womöglich ein Bediener der Bohrmaschine verletzt wird, ist herkömmlicherweise eine mechanische Schutzeinrichtung in Form einer Rutschkupplung in der Bohrmaschine verbaut. Diese trennt den Antrieb von dem Bohrwerkzeug, die Speisung des Elektromotors wird abgeschaltet und der Elektromotor läuft aus, ohne den Bediener zu gefährden. Soll nun eine elektronische Schutzeinrichtung diese Funktion übernehmen, sind hohe Bremsströme erforderlich, um diesen Vorgang in wenigen Millisekunden durchzuführen, damit die Sicherheit des Bedieners gewährleistet ist.

Um einen hohen Bremsstrom mittels einer elektronischen Schaltung zu erzeugen, wird beispielsweise bei Elektromotoren die Spannung an der Rotorwicklung umgepolt. Die Umpolung wird bei einem Elektromotor herkömmlicherweise durch Verwendung einer Brückenschaltung mit TRIACs (Zweirichtungs-Thyristortrioden), die an einer Wechselspannung betrieben wird, durchgeführt. Bei dieser Verwendung von TRIACs kann die Umpolung nur während eines Nulldurchganges des Wechselstroms erfolgen, da TRIACs nur dann ihren Zustand wechseln, insbesondere abschalten, können. Daraus kann bei dem Abbremsvorgang eine zeitliche Verzögerung von bis zu 10 ms (bei einer Periodendauer einer Netzhalbwelle von 50 Hz) resultieren. Um dennoch innerhalb einer vorbestimmten Zeitspanne den Motor anzuhalten, muss in diesem Fall der Bremsstrom erhöht werden. Dies führt jedoch bei bürstenbetriebenen Elektromotoren zu einem wesentlich höheren Kohlebürstenverschleiß. Zudem kann bei der Verwendung von TRIACs bei der Umpolung der Rotorspannung keine Regelung der im Elektromotor auftretenden Ströme erfolgen.

Vor diesem Hintergrund besteht eine Aufgabe der vorliegenden Erfindung darin, ein verbessertes Steuerverfahren für eine elektrische Handwerkzeugmaschine vorzuschlagen.

OFFENBARUNG DER ERFINDUNG

Gemäß einem ersten Aspekt wird ein Steuerverfahren zum Abbremsen eines Elektromotors einer elektrischen Handwerkzeugmaschine vorgeschlagen. Der Elektromotor umfasst eine Statorwicklung und eine Rotorwicklung. In einem ersten Schritt wird der Elektromotor von einem Motorbetrieb in einen Bremsbetrieb geschalten. In einem zweiten Schritt wird eine an der Rotorwicklung anliegende Eingangsspannung im Vergleich zum Motorbetrieb umgepolt. In einem dritten Schritt wird ein Rotorstrom der Rotorwicklung in Abhängigkeit eines vorbestimmten Schwellwerts begrenzt. In einem vierten Schritt wird ein Statorstrom der Statorwicklung in Abhängigkeit einer aktuellen Drehzahl des Elektromotors geregelt.

Dieses Verfahren weist den Vorteil auf, dass bei einem Abbremsvorgang des Elektromotors der Rotor- und der Statorstrom des Elektromotors präzise und unabhängig voneinander eingestellt werden können.

Dadurch kann in vorteilhafter Weise der Rotorstrom auf ein vorbestimmtes Stromniveau begrenzt werden und es kann der Statorstrom unabhängig hiervon geregelt werden, so dass es möglich ist, den Elektromotor innerhalb einer vorgegebenen Zeitdauer, jedoch mit einem hohen Bremsmoment, kohlebürsten-schonend abzubremsen. Gleichzeitig kann aufgrund des begrenzten Rotorstroms und des regelbaren Statorstroms das Bürstenfeuer sowie die Erwärmung des Elektromotors reduziert werden. Dadurch kann der Kohlebürstenverschleiß des Elektromotors verringert werden. Dies führt zu verlängerten Wartungsintervallen des Elektromotors und damit zu einer erhöhten Betriebsdauer des Elektromotors der elektrischen Handwerkzeugmaschine.

Der Elektromotor umfasst einen bürstenbehafteten Elektromotor, vorzugsweise einen Universalmotor oder einen Allstrommotor.

Die elektrische Handwerkzeugmaschine ist beispielsweise als eine Bohrmaschine, ein Bohrhammer, eine Säge, ein Rührgerät, ein Schleifgerät, ein Trennschleifer oder dergleichen ausgebildet. Die elektrische Handwerkzeugmaschine ist insbesondere kabelgebunden betreibbar. Alternativ kann die elektrische Handwerkzeugmaschine eine Aufnahmebucht zum Aufnehmen eines Akkumulators aufweisen, welcher diese mit Energie versorgt.

Der Elektromotor umfasst insbesondere einen Stator mit zumindest der Statorwicklung und einen Rotor mit zumindest der Rotorwicklung. Die Statorwicklung kann als eine Feldwicklung des Elektromotors bezeichnet werden, während die Rotorwicklung als eine Ankerwicklung des Elektromotors bezeichnet werden kann. Insbesondere weist die Statorwicklung einen ohmschen Widerstand und eine Induktivität auf, und die Rotorwicklung weist ebenfalls einen ohmschen Widerstand und eine Induktivität auf. Der jeweilige ohmsche Widerstand ist vorzugsweise möglichst klein. Wenn eine Spannung an die Statorwicklung oder an die Rotorwicklung angelegt wird, fließt ein Strom durch die jeweilige Wicklung. Aufgrund des Stroms und der Induktivität baut sich ein jeweiliges Magnetfeld auf. Je nach der Phasenbeziehung zwischen dem Stator und dem Rotor und der Richtung des Stromflusses (und damit der Richtung des Magnetfelds) und der jeweiligen Drehrichtung des Motors wird der Rotor angetrieben oder abgebremst. Da sich der Rotor in dem Magnetfeld des Stators bewegt, wird gemäß der Lenz'schen Regel in der Rotorwicklung eine Spannung induziert, in deren Folge ein Strom fließen kann, der der Ursache (Änderung des magnetischen Flusses) entgegenwirkt. Das heißt, der derart induzierte Strom bedingt seinerseits ein Magnetfeld, das dem Magnetfeld des Stators entgegengesetzt ist. Durch die Steuerung des Stromflusses in dem Stator und in dem Rotor kann daher zwischen einem Antreiben des Elektromotors und einem Abbremsen des Elektromotors umgeschaltet werden.

Während des Motorbetriebs wird vorzugsweise ein Arbeitsvorgang, wie ein Bohren in einen Untergrund oder ein Stemmvorgang, von einem Bediener der elektrischen Handwerkzeugmaschine durchgeführt. Im Bremsbetrieb wird insbesondere der Elektromotor, und damit auch ein von diesem angetriebenes Werkzeug, zum Stillstand gebracht. Unter dem Begriff "Bremsbetrieb" ist im Rahmen dieser Patentanmeldung zu verstehen, dass der Elektromotor sich nicht in einem Motorbetrieb befindet. Der Bremsbetrieb kann auch Zeitintervalle umfassen, in denen der Elektromotor nicht mit einem Bremsmoment gebremst wird, und kann Zeitintervalle umfassen, in denen ein Stromfluss durch den Elektromotor eine antreibende Wirkung hat. Dies kann insbesondere direkt nach dem Umschalten von dem Motorbetrieb in den Bremsbetrieb für ein kurzes Zeitintervall der Fall sein.

In dem dritten Schritt wird vorzugsweise der Rotorstrom derart in Abhängigkeit des vorbestimmten Schwellwerts begrenzt, dass der Betrag des Rotorstroms kleiner oder gleich dem vorbestimmten Schwellwert ist, also den vorbestimmten Schwellwert nicht überschreitet.

Das Umpolen der Eingangsspannung an der Rotorwicklung $U_{in}$ in dem zweiten Schritt wird insbesondere nachfolgend erläutert. Für den Rotorstrom durch die Rotorwicklung $i_{Armature}$ gilt beispielsweise näherungsweise die nachfolgende Gleichung (1):

$$i_{Armature} = \frac{1}{L_{Armature}} \int u_{L_{Armature}} \cdot dt, \qquad \text{Gleichung (1)}$$

wobei $L_{Armature}$ die Induktivität der Rotorwicklung und $u_{L_{Armature}}$ die Rotorspannung an der Rotorwicklung darstellen.

Im Motorbetrieb vor dem Umpolen gilt für die Rotorspannung $u_{L_{Armature}}$ die Gleichung (2):

$$u_{L_{Armature}} = U_{in} - U_{R_{Armature}} - U_{IND}, \qquad \text{Gleichung (2)}$$

wobei $U_{in}$ die Eingangsspannung an der Rotorwicklung, $U_{R_{Armature}}$ eine am ohmschen Widerstand des Rotors abfallende Spannung und $U_{IND}$ eine an der Rotorwicklung induzierte Spannung ist, welche durch die Gleichung (3) darstellbar ist:

$$U_{IND} = c_A \cdot \Psi_E \cdot \omega, \qquad \text{Gleichung (3)}$$

wobei $c_A$ eine Maschinenkonstante, $\Psi_E$ der durch den Statorstrom durch die Statorwicklung erzeugte magnetische Erregerfluss und $\omega$ die aktuelle Drehzahl des Rotors darstellen.

Der magnetische Erregerfluss $\Psi_E$ wird insbesondere derart bereitgestellt, dass der sich drehende Rotor in dem magnetischen Erregerfluss $\Psi_E$ bewegt. Der magnetische Erregerfluss $\Psi_E$ kann auch als magnetisches Feld der Statorwicklung bezeichnet werden, welches durch den Fluss des Statorstroms durch die Statorwicklung hervorgerufen wird.

Durch das Umpolen der Eingangsspannung an der Rotorwicklung $U_{in}$ weist diese das gleiche Vorzeichen wie die induzierte Spannung $U_{IND}$ auf, weshalb die Spannungen nunmehr alle betragsmäßig addiert werden. Im Bremsbetrieb nach dem Umpolen gilt somit für die Rotorspannung $u_{L_{Armature}}$ die Gleichung (4):

$$u_{L_{Armature}} = -U_{in} - U_{R_{Armature}} - U_{IND}. \qquad \text{Gleichung (4)}$$

Infolgedessen wird ein dem Statorstrom durch die Statorwicklung entgegengerichteter Strom in der Rotorwicklung generiert. Damit wird durch den Rotorstrom ein Magnetfeld erzeugt, das so mit dem von der Statorwicklung erzeugten Magnetfeld wechselwirkt, dass sich ein Bremsmoment ergibt. Somit wird der Rotor abgebremst.

Wenn die Drehzahl des Elektromotors einen vorbestimmten Schwellwert erreicht hat, wird der Elektromotor vorzugsweise komplett von einer Energiequelle getrennt.

Gemäß einer Ausführungsform des Steuerverfahrens wird der zweite Schritt durchgeführt, sobald der Rotorstrom einen vorbestimmten Schaltschwellwert erreicht oder unterschreitet.

Gemäß einer weiteren Ausführungsform des Steuerverfahrens ist der vorbestimmte Schaltschwellwert 0 A.

Wenn der Rotorstrom insbesondere den vorbestimmten Schaltschwellwert erreicht hat, ist der Rotorstrom vollständig abgeklungen, er beträgt somit vorzugsweise 0 A.

Gemäß einer weiteren Ausführungsform des Steuerverfahrens umfasst der zweite Schritt ferner: Schalten der Rotorwicklung parallel zu der Statorwicklung.

In dem zweiten Schritt erfolgt das Parallelschalten vorzugsweise zeitlich vor dem Umpolen. Insbesondere sind zeitlich vor dem Parallelschalten die Stator- und die Rotorwicklung des Elektromotors wie bei einer Reihenschlussmaschine verschaltet, wohingegen zeitlich nach dem Parallelschalten die Stator- und die Rotorwicklung des Elektromotors wie bei einer Nebenschlussmaschine verschaltet sind.

Gemäß einer weiteren Ausführungsform des Steuerverfahrens umfasst der vierte Schritt: Erhöhen des Statorstroms in Abhängigkeit des Rotorstroms und/oder der aktuellen Drehzahl des Elektromotors.

In dem vierten Schritt wird der Statorstrom insbesondere mit einem Absinken der aktuellen Drehzahl erhöht. Durch eine Erhöhung des Statorstroms kann das Bremsmoment erhöht werden.

Gemäß einer weiteren Ausführungsform des Steuerverfahrens wird der vierte Schritt nach Ablauf eines vorbestimmten Zeitraums nach dem Durchführen des zweiten Schrittes durchgeführt.

Insbesondere wird nach dem Umpolen in dem zweiten Schritt auf den Ablauf des vorbestimmten Zeitraums gewartet. Der vorbestimmte Zeitraum beträgt unter 5 ms, bevorzugt unter 4 ms, bevorzugt unter 3 ms, bevorzugt unter 2 ms. Sobald der vorbestimmte Zeitraum abgelaufen ist, wird vorzugsweise die Statorwicklung bestromt und der Statorstrom kann erhöht werden. Somit kann der Statorstrom unabhängig von dem Rotorstrom geregelt werden. Diese Maßnahme reduziert in vorteilhafter Weise das Bürstenfeuer, wodurch der Kohlebürstenverschleiß verringert wird.

Gemäß einer weiteren Ausführungsform umfasst das Steuerverfahren: Erfassen eines vorbestimmten Betriebszustands der elektrischen Handwerkzeugmaschine während des Motorbetriebs des Elektromotors, und Abbremsen der elektrischen Handwerkzeugmaschine gemäß der ersten bis vierten Schritte, wenn der vorbestimmte Betriebszustand erfasst wird.

Gemäß einer weiteren Ausführungsform des Steuerverfahrens umfasst der vorbestimmte Betriebszustand zumindest einen Betriebsunterbrechungszustand, insbesondere ein Verkeilen eines Bohrwerkzeugs der elektrischen Handwerkzeugmaschine.

Wenn sich beispielsweise während eines Bohrvorgangs mit der elektrischen Handwerkzeugmaschine das Bohrwerkzeug in einem Untergrund, wie einer Armierung in einem Stahlbetonblock, verkeilt, wird dies als Betriebsunterbrechungszustand erfasst. Anschließend wird der Elektromotor wie vorstehend beschrieben abgebremst.

Gemäß einer weiteren Ausführungsform umfasst das Steuerverfahren ferner: Erfassen des vorbestimmten Betriebszustands mittels eines Sensors, insbesondere mittels eines Gyrosensors, der elektrischen Handwerkzeugmaschine.

Gemäß einem zweiten Aspekt wird ein Computerprogrammprodukt vorgeschlagen, welches Befehle umfasst, die bei der Ausführung des Programms durch einen Computer diesen veranlassen, das Steuerverfahren gemäß dem ersten Aspekt auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein Steuerverfahren zum Steuern einer elektrischen Antriebseinheit für eine elektrische Handwerkzeugmaschine vorgeschlagen. Die elektrische Antriebseinheit umfasst einen Elektromotor mit einer Statorwicklung und einer Rotorwicklung, eine Ansteuerschaltung zum Ansteuern des Elektromotors und eine Anschlusseinheit zum Koppeln einer Energiequelle zum Antreiben des Elektromotors. Die Statorwicklung ist über einen ersten Knoten mit einer statorseitigen ersten Halbbrücke umfassend ein erstes Halbleiterbauelement und ein zweites Halbleiterbauelement verbunden und ist über einen zweiten Knoten mit der Rotorwicklung verbunden. Die Rotorwicklung ist mit einem dritten Knoten verbunden, der über ein leitfähiges Bauelement mit der Anschlusseinheit verbunden ist. Die Ansteuerschaltung umfasst ein drittes Halbleiterbauelement, das über den zweiten Knoten mit der Rotorwicklung und der Statorwicklung verbunden ist und über einen vierten Knoten direkt mit der Anschlusseinheit verbunden ist. Das Steuerverfahren gemäß dem dritten Aspekt weist vier Schritte auf:

In einem ersten Schritt des Steuerverfahrens wird das erste Halbleiterbauelement in einen nicht-leitenden Zustand zum Schalten des Elektromotors von einem Motorbetrieb in einen Bremsbetrieb versetzt. In einem zweiten Schritt des Steuerverfahrens werden das erste Halbleiterbauelement und das dritte Halbleiterbauelement in einen leitenden Zustand zum Umpolen einer an der Rotorwicklung anliegenden Eingangsspannung im Vergleich zum Motorbetrieb versetzt. In einem dritten Schritt des Steuerverfahrens wird das erste Halbleiterbauelement in einen nicht-leitenden Zustand in Abhängigkeit eines vorbestimmten Schwellwerts für einen Rotorstrom durch die Rotorwicklung versetzt, um den Rotorstrom zu begrenzen. In einem vierten Schritt des Steuerverfahrens wird das erste Halbleiterbauelement abwechselnd in einen leitenden Zustand und in einen nicht-leitenden Zustand versetzt, um einen Statorstrom durch die Statorwicklung in Abhängigkeit einer aktuellen Drehzahl des Elektromotors zu regeln.

Die gezielte Ansteuerung der jeweiligen Halbleiterbauelemente der elektrischen Antriebseinheit gemäß dem Steuerverfahren gemäß dem dritten Aspekt weist den Vorteil auf, dass bei einem Abbremsvorgang des Elektromotors der Rotor- und der Statorstrom des Elektromotors präzise und unabhängig voneinander eingestellt werden können.

Dadurch kann in vorteilhafter Weise der Rotorstrom auf ein vorbestimmtes Stromniveau begrenzt werden und es kann der Statorstrom unabhängig hiervon geregelt werden, so dass es möglich ist, den Elektromotor innerhalb einer vorgegebenen Zeitdauer, jedoch mit einem hohen Bremsmoment, kohlebürsten-schonend abzubremsen. Gleichzeitig kann aufgrund des begrenzten Rotorstroms und des regelbaren Statorstroms das Bürstenfeuer sowie die Erwärmung des Elektromotors reduziert werden. Dadurch kann der Kohlebürstenverschleiß des Elektromotors verringert werden. Dies führt zu verlängerten Wartungsintervallen des Elektromotors und damit zu einer erhöhten Betriebsdauer des Elektromotors der elektrischen Handwerkzeugmaschine.

Ein weiterer Vorteil dieses Steuerverfahrens ist, dass die jeweiligen Halbleiterbauelemente zu jedem beliebigen Zeitpunkt im Motorbetrieb und/oder im Bremsbetrieb in einen leitenden Zustand oder in einen nicht-leitenden Zustand versetzt werden können. Somit kann im Motorbetrieb bei einem Verkeilen des Bohrwerkzeugs unmittelbar der Bremsbetrieb eingeleitet werden. Dies erhöht die Sicherheit für einen Bediener der elektrischen Handwerkzeugmaschine.

Ein Vorteil der elektrischen Antriebseinheit ist, dass die Ansteuerschaltung der elektrischen Antriebseinheit eine geringe Anzahl an Halbleiterbauelementen aufweist, insbesondere im Vergleich mit herkömmlichen Antriebseinheiten. Infolgedessen kann der Fertigungsaufwand reduziert werden, während, aufgrund der geringen Anzahl an Halbleiterbauelementen, die Ausfallsicherheit der elektrischen Antriebseinheit erhöht wird.

Wenn das jeweilige Halbleiterbauelement in einen leitenden Zustand versetzt ist, kann ein Strom durch das Halbleiterbauelement fließen. Wenn das jeweilige Halbleiterbauelement in einen nicht-leitenden Zustand versetzt ist, kann kein Strom durch das Halbleiterbauelement fließen.

Durch das Versetzen des ersten Halbleiterbauelements in dem ersten Schritt des Steuerverfahrens in den nicht-leitenden Zustand wird der Elektromotor vorzugsweise von einem Motorbetrieb in einen Bremsbetrieb umgeschaltet und ein Speisestromfluss wird dadurch unterbrochen.

Vorzugsweise erfolgt das Unterbrechen des Speisestromflusses nicht im Rahmen einer Ansteuerung des ersten Halbleiterbauelements mit einem PWM-Signal, wie es beispielsweise in dem Motorbetrieb verwendet wird. Der Zeitraum des Unterbrechens des Speisestromflusses ist insbesondere um ein Vielfaches größer als eine Periodendauer des PWM-Signals.

Die Periodendauer des PWM-Signals umfasst zumindest einen Impuls (High-Pegel) und einen Null-Impuls (Low-Pegel). Der Tastgrad gibt vorzugsweise das Verhältnis der Impulsdauer oder des Impulses des PWM-Signals zu der Periodendauer des PWM-Signals an. Beispielsweise beträgt die Impulsdauer (High-Pegel) bei einem Tastgrad von 0,550% der Periodendauer. Die restlichen 50% der Periodendauer umfassen den Null-Impuls (Low-Pegel). Das heißt, dass bei einem PWM-Signal, welches einen Tastgrad von 0,5 aufweist und eine Periodendauer von 100 $\mu$s umfasst, das PWM-Signal für einen Zeitraum von 50 $\mu$s einen Impuls oder einen High-Pegel ausgibt, und für einen Zeitraum von 50 $\mu$s einen Null-Impuls oder einen Low-Pegel ausgibt.

Ein Steueranschluss des jeweiligen Halbleiterbauelements, wie beispielsweise des ersten Halbleiterbauelements, wird insbesondere mittels des High-Pegels des PWM-Signals oder des Low-Pegels des PWM-Signals angesteuert. Falls beispielsweise das jeweilige Halbleiterbauelement ein Bipolartransistor ist, ist der Steueranschluss als ein Basis-Anschluss ausgebildet. Alternativ, falls das jeweilige Halbleiterbauelement als ein MOSFET oder ein IGBT ausgebildet ist, ist der Steueranschluss als ein Gate-Anschluss ausgebildet.

Wenn insbesondere an dem Steueranschluss des jeweiligen Halbleiterbauelements ein High-Pegel anliegt, wird das jeweilige Halbleiterbauelement in einen leitenden Zustand versetzt. Falls andererseits ein Low-Pegel an dem Steueranschluss des jeweiligen Halbleiterbauelements anliegt, wird das jeweilige Halbleiterbauelement in einen nicht-leitenden Zustand versetzt. Es sei angemerkt, dass auch eine umgekehrte Logik verwendet werden kann, bei der die Rolle von High-Pegel und Low-Pegel vertauscht sind.

Gemäß einem vierten Aspekt wird ein Steuerverfahren zum Steuern einer elektrischen Antriebseinheit für eine elektrische Handwerkzeugmaschine vorgeschlagen. Die elektrische Antriebseinheit umfasst einen Elektromotor umfassend eine Statorwicklung und eine Rotorwicklung, eine Ansteuerschaltung zum Ansteuern des Elektromotors und eine Anschlusseinheit zum Koppeln einer Energiequelle zum Antreiben des Elektromotors. Die Statorwicklung ist über einen ersten Knoten mit einer statorseitigen ersten Halbbrücke umfassend ein erstes Halbleiterbauelement und ein zweites Halbleiterbauelement verbunden und ist über einen zweiten Knoten mit der Rotorwicklung verbunden. Die Ansteuerschaltung umfasst ein drittes Halbleiterbauelement, das über den zweiten Knoten mit der Rotorwicklung und der Statorwicklung verbunden ist und über einen vierten Knoten direkt mit der Anschlusseinheit verbunden ist. Die Rotorwicklung ist mit einem dritten Knoten verbunden, der über ein viertes Halbleiterbauelement mit der Anschlusseinheit verbunden ist. Die Ansteuerschaltung weist ferner ein fünftes Halbleiterbauelement auf, das über den dritten Knoten mit der Rotorwicklung verbunden ist und das über einen fünften Knoten direkt mit der Anschlusseinheit verbunden ist. Das Steuerverfahren gemäß dem vierten Aspekt weist vier Schritte auf:

In einem ersten Schritt des Steuerverfahrens wird das erste und/oder das vierte Halbleiterbauelement in einen nicht-leitenden Zustand zum Schalten des Elektromotors von einem Motorbetrieb in einen Bremsbetrieb versetzt. In einem zweiten Schritt des Steuerverfahrens werden das dritte Halbleiterbauelement und das fünfte Halbleiterbauelement in einen leitenden Zustand zum Umpolen einer an der Rotorwicklung anliegenden Eingangsspannung im Vergleich zum Motorbetrieb versetzt. In einem dritten Schritt des Steuerverfahrens werden das vierte Halbleiterbauelement und das fünfte Halbleiterbauelement in Abhängigkeit eines vorbestimmten Schwellwerts für einen Rotorstrom durch die Rotorwicklung abwechselnd gegengleich in einen leitenden Zustand und in einen nicht-leitenden Zustand versetzt, um den Rotorstrom zu begrenzen. In einem vierten Schritt des Steuerverfahrens wird das erste Halbleiterbauelement abwechselnd in einen leitenden Zustand und in einen nicht-leitenden Zustand versetzt, um einen Statorstrom durch die Statorwicklung in Abhängigkeit einer aktuellen Drehzahl des Elektromotors zu regeln.

Die gezielte Ansteuerung der jeweiligen Halbleiterbauelemente der elektrischen Antriebseinheit gemäß dem Steuerverfahren gemäß dem vierten Aspekt weist den Vorteil auf, dass bei einem Abbremsvorgang des Elektromotors der Rotor- und der Statorstrom des Elektromotors präzise und unabhängig voneinander eingestellt werden können.

Dadurch kann in vorteilhafter Weise der Rotorstrom auf ein vorbestimmtes Stromniveau begrenzt werden und es kann der Statorstrom unabhängig hiervon geregelt werden, so dass es möglich ist, den Elektromotor innerhalb einer vorgegebenen Zeitdauer, jedoch mit einem hohen Bremsmoment, kohlebürsten-schonend abzubremsen. Gleichzeitig kann aufgrund des begrenzten Rotorstroms und des regelbaren Statorstroms das Bürstenfeuer sowie die Erwärmung des Elektromotors reduziert werden. Dadurch kann der Kohlebürstenverschleiß des Elektromotors verringert werden. Dies führt zu verlängerten Wartungsintervallen des Elektromotors und damit zu einer erhöhten Betriebsdauer des Elektromotors der elektrischen Handwerkzeugmaschine.

Ein weiterer Vorteil dieses Steuerverfahrens ist, dass die jeweiligen Halbleiterbauelemente zu jedem beliebigen Zeitpunkt im Motorbetrieb und/oder im Bremsbetrieb in einen leitenden Zustand oder in einen nicht-leitenden Zustand versetzt werden können. Somit kann im Motorbetrieb bei einem Verkeilen des Bohrwerkzeugs unmittelbar der Bremsbetrieb eingeleitet werden. Dies erhöht die Sicherheit für einen Bediener der elektrischen Handwerkzeugmaschine.

Der Ausdruck "abwechselnd gegengleich" bedeutet insbesondere, dass zwei Halbleiterbauelemente, wie das vierte und das fünfte Halbleiterbauelement, derart abwechselnd geschaltet werden, dass beispielsweise das vierte Halbleiterbauelement in einem leitenden Zustand ist, während gleichzeitig das fünfte Halbleiterbauelement in einem nicht-leitenden Zustand ist, oder auch umgekehrt.

Gemäß einer Ausführungsform des dritten oder vierten Aspekts ist das erste, zweite, dritte, vierte und/oder fünfte Halbleiterbauelement als ein Bipolartransistor, insbesondere als ein IGBT, oder als ein MOSFET ausgebildet.

Ein IGBT ist ein Bipolartransistor mit einer isolierten Gate-Elektrode. Insbesondere ist eine Schutzdiode (Freilaufdiode) parallel zu dem jeweiligen Halbleiterbauelement in Sperrrichtung zu einem Speisestrom der Energiequelle angeordnet. Vorzugsweise dienen Freilaufdioden zum Schutz vor einer Überspannung beim Abschalten einer induktiven Gleichspannungslast, wie zum Beispiel einem Elektromotor. Wenn das jeweilige Halbleiterbauelement als ein Bipolartransistor ausgebildet ist, ist die Freilaufdiode parallel zu dem Kollektor-Anschluss und dem Emitter-Anschluss des Bipolartransistors geschaltet. Wenn andererseits das jeweilige Halbleiterbauelement als ein MOSFET ausgebildet ist, ist die Freilaufdiode parallel zu dem Drain-Anschluss und dem Source-Anschluss des MOSFET geschaltet. Beispielsweise kann ein jeweiliger Rotor- oder Statorstrom über eine jeweilige Freilaufdioden abklingen.

Vorzugsweise ist das zweite Halbleiterbauelement als ein passives Bauelement, wie eine Diode, ausgebildet. Dies vereinfacht den Aufbau der Ansteuerschaltung und senkt den Fertigungsaufwand im Vergleich zu einem aktiven Bauelement, wie einem Bipolartransistor oder einem MOSFET. Weiterhin kann das dritte Halbleiterbauelement als ein Thyristor ausgebildet sein. Dies senkt ebenfalls den Fertigungsaufwand.

Vorzugsweise weist die elektrische Antriebseinheit gemäß dem dritten und vierten Aspekt zumindest eine erste Strommesseinheit zum Bestimmen des Rotorstroms und eine zweite Strommesseinheit zum Bestimmen des Statorstroms auf.

Gemäß einer Ausführungsform des dritten oder vierten Aspekts wird die elektrische Antriebseinheit mittels einer Gleichspannungsquelle, einer pulsierenden Gleichspannungsquelle oder einer Wechselspannungsquelle mit einem Gleichrichter betrieben.

Vorzugsweise ist die Energiequelle eine Wechselspannungsquelle mit einem Gleichrichter, wobei zusätzlich ein Glättungskondensator vorgesehen sein kann.

Gemäß einer Ausführungsform des dritten oder vierten Aspekts umfasst die Ansteuerschaltung mehrere Treiberschaltungen, wobei jedem Halbleiterbauelement eine Treiberschaltung zum Ausgeben eines jeweiligen Steuersignals zum Ansteuern des jeweiligen Halbleiterbauelements zugeordnet ist.

Durch diese Ansteuerung der Halbleiterbauelemente durch die Ansteuerschaltung mittels der jeweiligen Treiberschaltung ist es möglich, dass bei einem Abbremsvorgang des Elektromotors der Rotor- und der Statorstrom des Elektromotors präzise und unabhängig voneinander eingestellt werden können. Das jeweilige Steuersignal ist insbesondere ein PWM (Pulsweitenmodulation)-Signal.

KURZE BESCHREIBUNG DER FIGUREN

Die nachfolgende Beschreibung erläutert die Erfindung anhand von exemplarischen Ausführungsformen und Figuren. In den Figuren zeigt:

Fig. 1       eine schematische Ansicht einer elektrischen Handwerkzeugmaschine;

Fig. 2A     eine schematische Ansicht einer ersten Ausführungsform einer Schaltungstopologie einer elektrischen Antriebseinheit;

Fig. 2B     ein schematisches Stromflussdiagramm im Motorbetrieb eines Elektromotors innerhalb der Schaltungstopologie der elektrischen Antriebseinheit gemäß Fig. 2A;

Fig. 2C     ein schematisches Stromflussdiagramm im Bremsbetrieb eines Elektromotors innerhalb der Schaltungstopologie der elektrischen Antriebseinheit gemäß Fig. 2A;

Fig. 3A     eine schematische Ansicht einer zweiten Ausführungsform einer Schaltungstopologie einer elektrischen Antriebseinheit;

Fig. 3B     ein schematisches Stromflussdiagramm im Motorbetrieb eines Elektromotors innerhalb der Schaltungstopologie der elektrischen Antriebseinheit gemäß Fig. 3A;

Fig. 3C     ein schematisches Stromflussdiagramm im Bremsbetrieb eines Elektromotors innerhalb der Schaltungstopologie der elektrischen Antriebseinheit gemäß Fig. 3A;

Fig. 4       ein schematisches Diagramm eines Ablaufs eines Steuerverfahrens zum Abbremsen eines Elektromotors, und

Fig. 5       ein schematisches Blockschaltbild eines Steuerverfahrens zum Abbremsen eines Elektromotors.

Gleiche oder funktionsgleiche Elemente werden durch gleiche Bezugszeichen in den Figuren indiziert, soweit nicht anders angegeben.

AUSFÜHRUNGSFORMEN DER ERFINDUNG

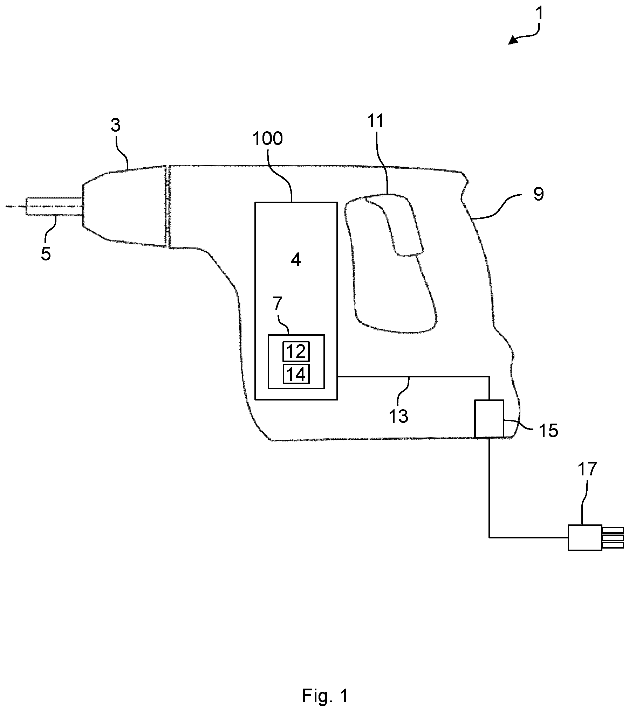

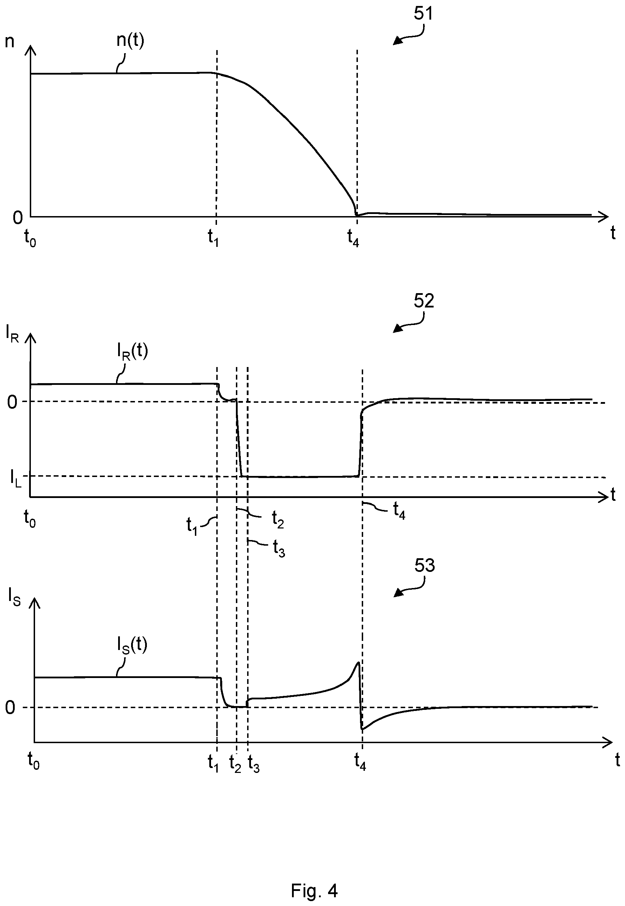

Fig. 1 zeigt eine schematische Ansicht einer elektrische Handwerkzeugmaschine 1, die beispielhaft als eine Bohrmaschine ausgebildet ist. Die Bohrmaschine 1 hat eine Werkzeugaufnahme 3, in welcher als ein Bohrwerkzeug 5 ein Bohrer eingesetzt ist. Ein primärer Antrieb der Bohrmaschine 1 ist ein Elektromotor 7 mit einer Statorwicklung 12 und einer Rotorwicklung 14. Ein Bediener kann die Bohrmaschine 1 mittels eines Handgriffs 9 führen und mittels eines Tasters 11 in Betrieb nehmen. Im Betrieb dreht die Bohrmaschine 1 den Bohrer 5 kontinuierlich um eine Arbeitsachse und kann dabei den Bohrer 5 längs der Arbeitsachse in einen Untergrund hineinbohren.
Die Bohrmaschine 1 weist in Fig. 1 eine elektrische Antriebseinheit 100 auf. Die elektrische Antriebseinheit 100 umfasst den Elektromotor 7 und eine Ansteuerschaltung 4 zum Ansteuern des Elektromotors 7. Die elektrische Antriebseinheit 100 ist über eine elektrische Leitungsanordnung 13 mit einem Anschlussterminal 15 gekoppelt, welches mittels eines Steckers 17 mit einem Stromnetz (nicht gezeigt) gekoppelt werden kann. Alternativ kann die Bohrmaschine 1 auch über einen Akkumulator (nicht gezeigt) mit Strom versorgt werden. Der Antriebsstrang beinhaltet beispielsweise eine Antriebswelle und ein Getriebe zwischen dem Elektromotor 7 und der Antriebswelle. Das Getriebe kann beispielsweise eine Drehzahl n(t) (siehe Fig. 4) des Elektromotors 7 auf eine gewünschte Drehzahl des Bohrers 5 anpassen.

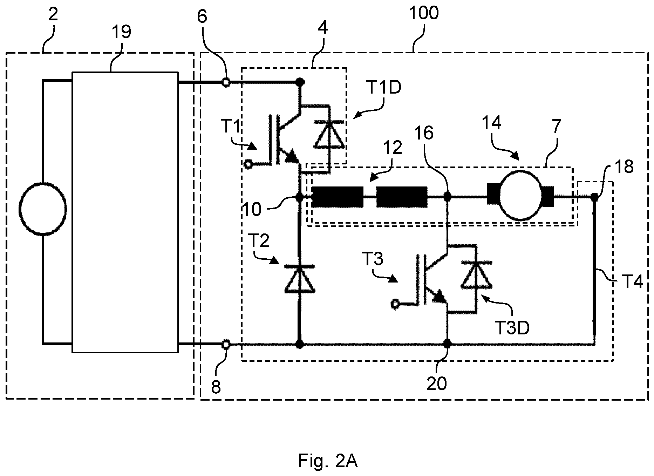

Fig. 2A zeigt eine schematische Ansicht einer ersten Ausführungsform einer Schaltungstopologie einer elektrischen Antriebseinheit 100, die beispielsweise in der elektrischen Handwerkzeugmaschine 1 gemäß Fig. 1 verwendet werden kann.
Die elektrische Antriebseinheit 100 der Fig. 2A weist einen Elektromotor 7 auf, welcher eine Statorwicklung 12 und eine Rotorwicklung 14 umfasst. Die elektrische Antriebseinheit 100 weist ferner eine Ansteuerschaltung 4 zum Ansteuern des Elektromotors 7 auf. Weiterhin weist die elektrische Antriebseinheit 100 eine Anschlusseinheit 6, 8 zum Koppeln einer Energiequelle 2 zum Antreiben des Elektromotors 7 auf. Die Energiequelle 2 ist in der Fig. 2A beispielhaft als eine Wechselspannungsquelle mit einem Gleichrichter 19 ausgebildet. Ebenso ist es insbesondere möglich, dass die Energiequelle 2 als eine Gleichspannungsquelle oder als eine pulsierende Gleichspannungsquelle ausgebildet ist.
Weiter ist in der Fig. 2A die Statorwicklung 12 über einen ersten Knoten 10 mit einer statorseitigen ersten Halbbrücke, die ein erstes Halbleiterbauelement T1 und ein zweites Halbleiterbauelement T2 umfasst, verbunden. Zusätzlich ist die Statorwicklung 12 über einen zweiten Knoten 16 mit der Rotorwicklung 14 verbunden. Die Rotorwicklung 14 ist mit einem dritten Knoten 18 verbunden, der über ein leitfähiges Bauelement T6 mit einem zweiten Anschluss 8 der Anschlusseinheit 6, 8 verbunden ist. Die Energiequelle 2 weist insbesondere einen ersten Pol, vorzugsweise einen positiven Pol auf, welcher mit einem ersten Anschluss 6 der Anschlusseinheit 6, 8 verbunden ist. Ferner umfasst die Energiequelle 2 einen zweiten Pol, insbesondere einen negativen Pol, der mit dem zweiten Anschluss 8 der Anschlusseinheit 6, 8 verbunden ist. Die Ansteuerschaltung 4 umfasst ein drittes Halbleiterbauelement T3, welches über den zweiten Knoten 16 mit der Rotorwicklung 14 und der Statorwicklung 12 verbunden ist und welches über einen vierten Knoten 20 direkt mit dem zweiten Anschluss 8 der Anschlusseinheit 6, 8 verbunden ist. Zusätzlich weisen das erste und das dritte Halbleiterbauelement T1, T3 eine jeweilige parallelgeschaltete Freilaufdiode T1D, T3D auf. In Fig. 2A ist das zweite Halbleiterbauelement T2 als eine Diode ausgebildet. Ein Anoden-Anschluss der Diode ist mit dem zweiten Anschluss 8 der Anschlusseinheit 6, 8 verbunden. Die Diode ist somit insbesondere in Sperrrichtung zu einem Speisestrom der Energiequelle 2 angeordnet. Ferner sind in Fig. 2A das erste und das dritte Halbleiterbauelement T1, T3 jeweils beispielhaft als ein IGBT ausgebildet.

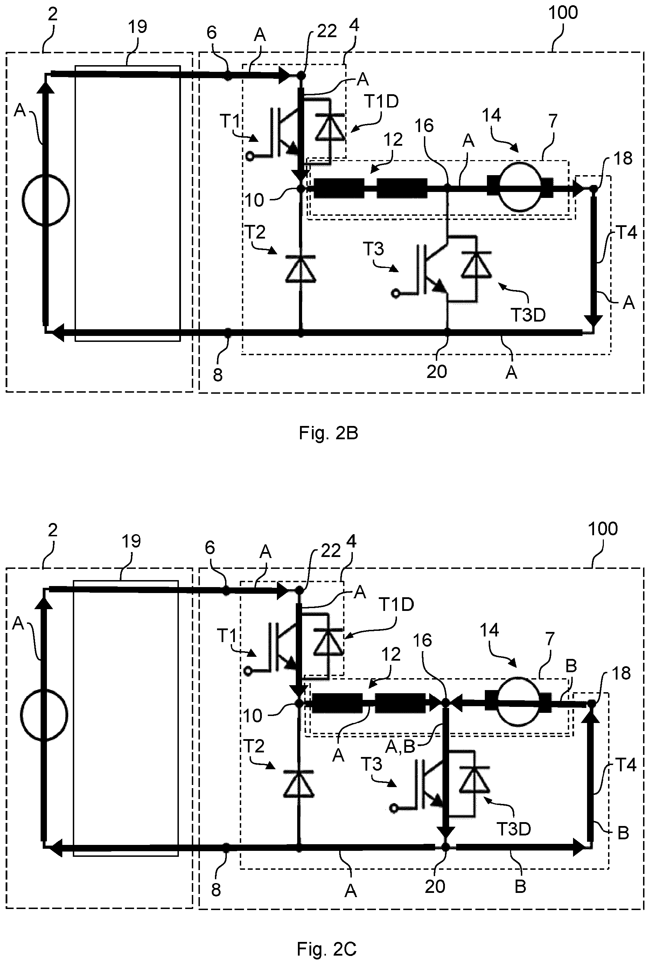

Fig. 2B zeigt ein schematisches Stromflussdiagramm eines Speisestroms, der in der Energiequelle 2 generiert wird, im Motorbetrieb eines Elektromotors 7 innerhalb der Schaltungstopologie der elektrischen Antriebseinheit 100 gemäß Fig. 2A. Im Motorbetrieb (Antriebsfall) ist das leitfähige Bauelement T4 dauerhaft in einem leitenden Zustand und das dritte Halbleiterbauelement T3 ist dauerhaft in einem nicht-leitenden Zustand, so dass die Statorwicklung 12 in Reihe zu der Rotorwicklung 14 geschaltet ist. Der Elektromotor 7 wird hier als eine Reihenschlussmaschine betrieben. Die Regelung der Höhe des Speisestroms durch die Stator- und Rotorwicklung 12, 14 und somit auch der aktuellen Drehzahl n(t) (siehe Fig. 4) des Elektromotors 7 erfolgt insbesondere anhand eines Versetzen des ersten Halbleiterbauelements T1 abwechselnd in einen leitenden Zustand und in einen nicht-leitenden Zustand.

In Fig. 2B fließt der Speisestrom im Antriebsfall des Elektromotors 7, wie in Fig. 2B durch die Pfeile A dargestellt, von der Energiequelle 2 über einen ersten Anschluss 6 der Anschlusseinheit 6, 8 und über einen fünften Knoten 22 durch das erste Halbleiterbauelement T1, von dem ersten Halbleiterbauelement T1 über einen ersten Knoten 10 durch die Statorwicklung 12, von der Statorwicklung 12 über einen zweiten Knoten 16 durch die Rotorwicklung 14 zu einem dritten Knoten 18, von dem dritten Knoten 18 durch das leitfähige Bauelement T4 über einen vierten Knoten 20 und über einen zweiten Anschluss 8 der Anschlusseinheit 6, 8 zurück zu der Energiequelle 2. Der fünfte Knoten 22 ist mit dem ersten Anschluss 6 der Anschlusseinheit 6, 8 verbunden. Der vierte Knoten 22 ist mit dem zweiten Anschluss 8 der Anschlusseinheit 6, 8 verbunden.

Fig. 2C zeigt ein schematisches Stromflussdiagramm im Bremsbetrieb eines Elektromotors 7 innerhalb der Schaltungstopologie der elektrischen Antriebseinheit 100 gemäß Fig. 2A. In dem Bremsbetrieb werden die jeweiligen Halbleiterbauelemente wie folgt angesteuert:

In einem ersten Schritt wird das erste Halbleiterbauelement T1 in einen nicht-leitenden Zustand zum Schalten des Elektromotors 7 von einem Motorbetrieb in einen Bremsbetrieb versetzt. Durch das Versetzen des ersten Halbleiterbauelements T1 in einen nicht-leitenden Zustand wird der Speisestromfluss unterbrochen. In einem zweiten Schritt wird das dritte Halbleiterbauelement T3 in einen leitenden Zustand versetzt, um die Rotorwicklung 14 parallel zu der Statorwicklung 12 zu schalten. In einem dritten Schritt wird das erste Halbleiterbauelement T1 in einen leitenden Zustand versetzt, um einen magnetischen Fluss bereitzustellen, so dass an der Rotorwicklung 14 eine Spannung induziert wird, die im Vergleich zu einer im Motorbetrieb des Elektromotors 7 an der Rotorwicklung 14 anliegenden Spannung entgegengesetzte Richtung aufweist. In einem vierten Schritt wird das erste Halbleiterbauelement T1 in einen nicht-leitenden Zustand in Abhängigkeit eines vorbestimmten Schwellwerts $I_L$ (siehe Fig. 4) für einen Rotorstrom $I_R(t)$ (siehe Fig. 4) durch die Rotorwicklung 14 versetzt, um den Rotorstrom $I_R(t)$ zu begrenzen. Der Rotorstrom $I_R(t)$ wird vorzugsweise auf einen vorbestimmten Schwellwert begrenzt. Beispielsweise ist hierzu eine Strommesseinheit (nicht dargestellt) vorgesehen, die zum Überwachen des Rotorstroms $I_R(t)$ eingerichtet ist. In einem fünften Schritt wird das erste Halbleiterbauelement T1 abwechselnd in einen leitenden Zustand und in einen nicht-leitenden Zustand versetzt, um einen Statorstrom Is(t) (siehe Fig. 4) durch die Statorwicklung 12 in Abhängigkeit einer aktuellen Drehzahl n(t) (siehe Fig. 4) des Elektromotors 7 zu regeln. Der Statorstrom Is(t) wird vorzugsweise auf einen drehzahlabhängigen Wert geregelt. Beispielsweise ist hierzu eine weitere Strommesseinheit (nicht dargestellt) vorgesehen, die zum Überwachen des Statorstroms $I_R(t)$ eingerichtet ist. Wenn die Drehzahl n(t) des Elektromotors 7 einen vorbestimmten Schwellwert erreicht hat, wird der Elektromotor 7 vorzugsweise komplett von der Energiequelle 2 getrennt. Der Bremsvorgang ist damit abgeschlossen.

Im Bremsbetrieb befindet sich insbesondere das dritte Halbleiterbauelement T3 dauerhaft in einem leitenden Zustand. Infolgedessen sind die Stator- und die Rotorwicklung 12, 14 nicht mehr in Reihe geschaltet. Der Elektromotor 7 wird deshalb als eine Nebenschlussmaschine und nicht mehr als eine Reihenschlussmaschine (siehe Fig. 2B) betrieben. Die insbesondere im Bremsbetrieb an der Rotorwicklung 14 induzierte Spannung wird vorzugsweise durch einen gemäß der Lenz'schen Regel induzierten Rotorstrom $I_R(t)$ in der Rotorwicklung 14 hervorgerufen. Da dieser Stromfluss derart gerichtet ist, dass das durch diesen hervorgerufene Magnetfeld seiner Ursache entgegen wirkt, entsteht ein Bremsmoment, das der Drehung des Rotors entgegenwirkt. Somit wird der Elektromotor 7 abgebremst.

Im Bremsbetrieb fließt ein Speisestrom, wie durch die Pfeile A in Fig. 2C dargestellt ist, von der Energiequelle 2 über einen ersten Anschluss 6 der Anschlusseinheit 6, 8 und über einen fünften Knoten 22 durch das erste Halbleiterbauelement T1, von dem ersten Halbleiterbauelement T1 über einen ersten Knoten 10 durch die Statorwicklung 12, von der Statorwicklung 12 über einen zweiten Knoten 16 durch das dritte Halbleiterbauelement T3, von dem dritten Halbleiterbauelement T3 über einen vierten Knoten 20 und über einen zweiten Anschluss 8 der Anschlusseinheit 6, 8 zurück zu der Energiequelle 2. Gleichzeitig fließt in der Rotorwicklung 14 ein induzierter Strom, der durch die Pfeile B in Fig. 2C dargestellt ist. Der induzierte Strom weist eine dem Speisestrom entgegengesetzte Richtung auf. Dieser entgegengerichtete Strom fließt von dem zweiten Knoten 16 durch das dritte Halbleiterbauelement T3 zu einem vierten Knoten 20, von dem vierten Knoten 20 über das leitfähige Bauelement T4 zu einem dritten Knoten 18 und von dem dritten Knoten 18 durch die Rotorwicklung 14 zurück zu dem zweiten Knoten 16.

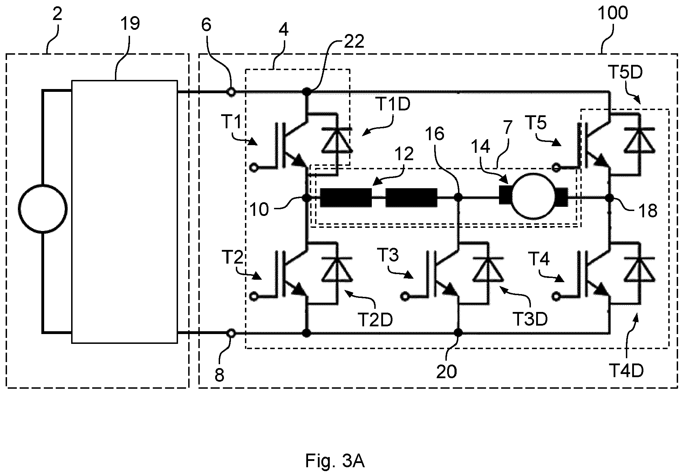

Fig. 3A zeigt eine schematische Ansicht einer zweiten Ausführungsform einer Schaltungstopologie einer elektrischen Antriebseinheit 100, die beispielsweise in der elektrischen Handwerkzeugmaschine 1 gemäß Fig. 1 verwendet werden kann.

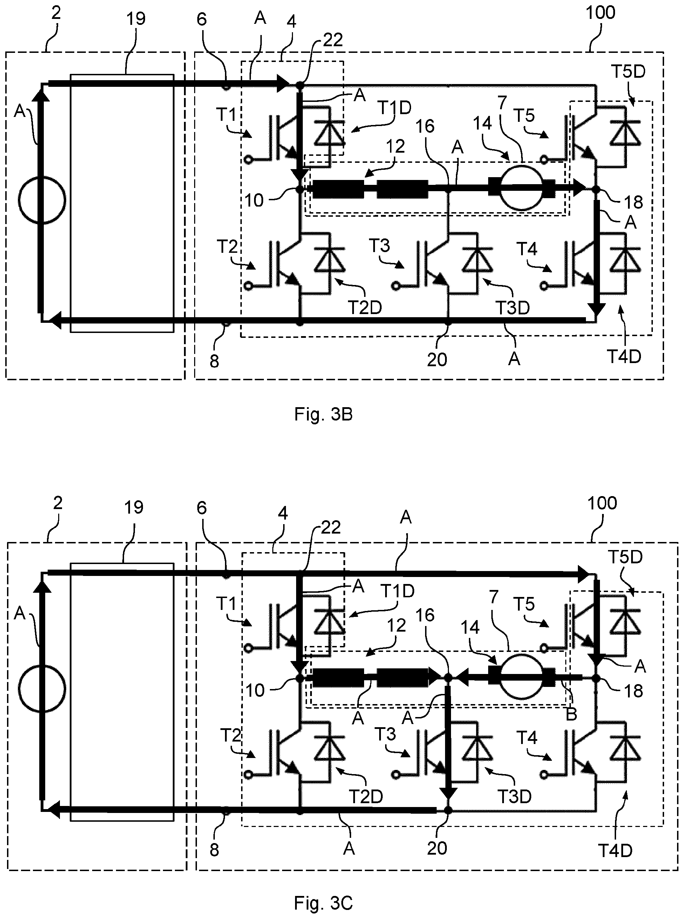

Die elektrische Antriebseinheit 100 der Fig. 3A weist einen ähnlichen Aufbau wie die elektrische Antriebseinheit 100 der Fig. 2A auf. Nachfolgend werden nur die Unterschiede zur elektrischen Antriebseinheit 100 der Fig. 2A erläutert. Zusätzlich zur Fig. 2A weist die elektrische Antriebseinheit 100 der Fig. 3A ein fünftes Halbleiterbauelement T5 auf. Dieses ist beispielhaft als ein IGBT mit parallel dazu geschalteter Freilaufdiode T5D ausgebildet. Das fünfte Halbleiterbauelement T5 ist über einen dritten Knoten 18 mit der Rotorwicklung 14 verbunden und ist über einen fünften Knoten 22 direkt mit einem ersten Anschluss 6 der Anschlusseinheit 6, 8 verbunden. Ferner ist das leitfähige Bauelement T4 in Fig. 3A als ein viertes Halbleiterbauelement T4 und ebenfalls beispielhaft als ein IGBT mit parallel dazu geschalteter Freilaufdiode T4D ausgebildet. Auch ist das zweite Halbleiterbauelement T2 in Fig. 3 als ein IGBT mit parallel dazu geschalteter Freilaufdiode T2D ausgebildet.

Fig. 3B zeigt ein schematisches Stromflussdiagramm eines Speisestroms im Motorbetrieb eines Elektromotors 7 innerhalb der Schaltungstopologie der elektrischen Antriebseinheit 100 gemäß Fig. 3A. Der Speisestromfluss im Motorbetrieb in Fig. 3B ist mit dem Speisestromfluss im Motorbetrieb in Fig. 2B identisch, weshalb hier auf eine Erklärung verzichtet wird. Es sei angemerkt, dass das vierte Halbleiterbauelement T4 hierbei dauerhaft in einem leitenden Zustand ist. Weiterhin sind im Motorbetrieb das zweite und fünfte Halbleiterbauelement T2, T5 dauerhaft in einem nicht-leitenden Zustand.

Fig. 3C zeigt ein schematisches Stromflussdiagramm im Bremsbetrieb eines Elektromotors 7 innerhalb der Schaltungstopologie der elektrischen Antriebseinheit 100 gemäß Fig. 3A. In dem Bremsbetrieb werden die jeweiligen Halbleiterbauelemente wie folgt angesteuert:

In einem ersten Schritt wird das erste und/oder das vierte Halbleiterbauelement T1, T4 in einen nicht-leitenden Zustand zum Schalten des Elektromotors 7 von einem Motorbetrieb in einen Bremsbetrieb versetzt. In einem zweiten Schritt werden das dritte Halbleiterbauelement T3 und das fünfte Halbleiterbauelement T5 in einen leitenden Zustand zum Umpolen einer an der Rotorwicklung 14 anliegenden Eingangsspannung im Vergleich zum Motorbetrieb versetzt. In einem dritten Schritt werden das vierte Halbleiterbauelement T4 und das fünfte Halbleiterbauelement T5 in Abhängigkeit eines vorbestimmten Schwellwerts $I_L$ (siehe Fig. 4) für einen Rotorstrom $I_R(t)$ (siehe Fig. 4) durch die Rotorwicklung 14 abwechselnd gegengleich in einen leitenden Zustand und in einen nicht-leitenden Zustand versetzt, um den Rotorstrom $I_R(t)$ zu begrenzen. Der Rotorstrom $I_R(t)$ wird vorzugsweise auf einen vorbestimmten Schwellwert begrenzt. Beispielsweise ist hierzu eine Strommesseinheit (nicht dargestellt) vorgesehen, die zum Überwachen des Rotorstroms $I_R(t)$ eingerichtet ist. Das vierte und das fünfte Halbleiterbauelement T4, T5 bilden insbesondere eine rotorseitige zweite Halbbrücke aus. In einem vierten Schritt wird das erste Halbleiterbauelement T1 abwechselnd in einen leitenden Zustand und in einen nicht-leitenden Zustand versetzt, um einen Statorstrom Is(t) (siehe Fig. 4) durch die Statorwicklung 12 in Abhängigkeit einer aktuellen Drehzahl n(t) (siehe Fig. 4) des Elektromotors 7 zu regeln. Der Statorstrom Is(t) wird vorzugsweise auf einen drehzahlabhängigen Wert geregelt. Beispielsweise ist hierzu eine weitere Strommesseinheit (nicht dargestellt) vorgesehen, die zum Überwachen des Statorstroms $I_R(t)$ eingerichtet ist.

Im Bremsbetrieb befindet sich insbesondere das dritte Halbleiterbauelement T3 dauerhaft in einem leitenden Zustand. Infolgedessen sind die Stator- und die Rotorwicklung 12, 14 nicht mehr in Reihe geschaltet. Der Elektromotor 7 wird deshalb als eine Nebenschlussmaschine und nicht mehr als eine Reihenschlussmaschine (siehe Fig. 3B) betrieben. Die Regelung des Statorstroms Is(t) durch die Statorwicklung 12 erfolgt (wie im Antriebsfall) insbesondere durch die statorseitige erste Halbbrücke umfassend das erste und das zweite Halbleiterbauelement T1, T2. Die Regelung des Rotorstroms $I_R(t)$ durch die Rotorwicklung 14 erfolgt durch die rotorseitige zweite Halbbrücke umfassend das vierte und fünfte Halbleiterbauelement T4, T5. Eine an der Rotorwicklung 14 induzierte Spannung wird vorzugsweise durch einen gemäß der Lenz'schen Regel im Bremsbetrieb induzierten Rotorstrom $I_R(t)$ in der Rotorwicklung 14 hervorgerufen. Der induzierte Rotorstrom $I_R(t)$ in der Rotorwicklung 14 wird insbesondere durch die Umpolung (siehe oben, zweiter Schritt) der Eingangsspannung an der Rotorwicklung 14 hervorgerufen. Da dieser Stromfluss derart gerichtet ist, dass das durch diesen hervorgerufene Magnetfeld seiner Ursache entgegen wirkt, entsteht ein Bremsmoment, das der Drehung des Rotors entgegenwirkt. Somit wird der Elektromotor 7 abgebremst.

Im Bremsbetrieb des Elektromotors 7 fließt ein Speisestrom, wie durch die Pfeile A in Fig. 3C dargestellt ist, von der Energiequelle 2 über einen ersten Anschluss 6 der Anschlusseinheit 6, 8 und über einen fünften Knoten 22 durch das erste Halbleiterbauelement T1, von dem ersten Halbleiterbauelement T1 über einen ersten Knoten 10 durch die Statorwicklung 12, von der Statorwicklung 12 über einen zweiten Knoten 16 durch das dritte Halbleiterbauelement T3, von dem dritte Halbleiterbauelement T3 über einen vierten Knoten 20 und über einen zweiten Anschluss 8 der Anschlusseinheit 6, 8 zurück zu der Energiequelle 2. Zusätzlich fließt der Speisestrom von der Energiequelle 2 über den ersten Anschluss 6 der Anschlusseinheit 6, 8 über den fünften Knoten 22 durch das fünfte Halbleiterbauelement T5 zu einem dritten Knoten 18. Durch die Umpolung der Eingangsspannung (siehe oben, zweiter Schritt) an der Rotorwicklung 14 fließt der Speisestrom nun in entgegengesetzter Richtung durch die Rotorwicklung (im Vergleich zum Motorbetrieb). Gleichzeitig wird in der Rotorwicklung 14 ein Strom induziert, der in die gleiche Richtung fließt, so dass die beiden Ströme sich betragsmäßig addieren. Wie durch den Pfeil B in Fig. 3C dargestellt, fließt der induzierte Strom von dem dritten Knoten 18 durch die Rotorwicklung 14 zu dem zweiten Knoten 16.

In den Fig. 3A - 3C gilt insbesondere: wenn beispielswiese der Speisestrom durch die statorseitige erste Halbbrücke zu hoch wird, wird das erste Halbleiterbauelement T1 in einen nicht-leitenden Zustand versetzt und das zweite Halbleiterbauelement T2 in einen leitenden Zustand versetzt, damit der Speisestrom über letzteres abklingen kann. Wenn andererseits insbesondere der Strom durch die rotorseitige zweite Halbbrücke, der sich insbesondere aus dem Speisestrom und dem induzierten Strom zusammensetzt, zu hoch wird, wird das fünfte Halbleiterbauelement T5 in einen nicht-leitenden Zustand versetzt und das vierte Halbleiterbauelement T4 in einen leitenden Zustand versetzt, damit der Strom über letzteres abklingen kann.

Fig. 4 zeigt ein schematisches Diagramm eines Ablaufs eines Steuerverfahrens zum Abbremsen eines Elektromotors 7 (siehe Fig. 1, 2A, 2B, 2C, 3A, 3B, 3C), beispielsweise eines Elektromotors 7 der elektrischen Handwerkzeugmaschine 1 gemäß Fig. 1. Das schematische Diagramm der Fig. 4 umfasst drei Graphen 51, 52 und 53. Ein erster Graph 51 zeigt den Verlauf der aktuellen Drehzahl n des Elektromotors 7 (vertikale Achse) in Abhängigkeit der Zeit t (horizontale Achse). Ein zweiter Graph 52 zeigt den Verlauf des Rotorstroms $I_R$ in dem Elektromotor 7 (vertikale Achse) in Abhängigkeit der Zeit t (horizontale Achse). Ein dritter Graph 53 zeigt den Verlauf des Statorstroms $I_s$ in dem Elektromotor 7 (vertikale Achse) in Abhängigkeit der Zeit t (horizontale Achse).

Zunächst befindet sich die elektrische Handwerkzeugmaschine 1 im Motorbetrieb (Zeitintervall zwischen $t_0$ und $t_1$). Dabei fließt insbesondere ein Rotorstrom $I_R(t)$ (siehe zweiter Graph 52, Zeitintervall zwischen $t_0$ und $t_1$) durch eine Rotorwicklung 14 (siehe Fig. 1, 2A, 2B, 2C, 3A, 3B, 3C) in Abhängigkeit einer Soll-Drehzahl des Elektromotors 7 sowie ein Statorstrom $Is(t)$ (siehe dritter Graph 53, Zeitintervall zwischen $t_0$ und $t_1$) durch eine Statorwicklung 12 (siehe Fig. 1, 2A, 2B, 2C, 3A, 3B, 3C) in Abhängigkeit der Soll-Drehzahl des Elektromotors 7.

Wenn sich beispielsweise in dem Motorbetrieb beim Arbeiten mit der elektrischen Handwerkzeugmaschine 1 das Bohrwerkzeug 5 (siehe Fig. 1) der elektrischen Handwerkzeugmaschine 1 in einem Armierungseisen verkeilt, wird dies durch einen Sensor, wie einen Gyrosensor, als ein Betriebsunterbrechungszustand der elektrischen Handwerkzeugmaschine 1 erfasst.

Zum Zeitpunkt $t_1$ wird der Betriebsunterbrechungszustand erfasst, bei welchem der Elektromotor 7 von einem Motorbetrieb in einen Bremsbetrieb umgeschaltet wird. Hierzu wird beispielsweise ein Speisestromfluss durch die Statorwicklung 12 und/oder die Rotorwicklung 14 unterbrochen. Nach dem Umschalten wird auf ein Abklingen des Rotorstroms $I_R(t)$ gewartet, was beispielsweise in wenigen Millisekunden erfolgt. Der Rotorstrom $I_R(t)$ gilt als abgeklungen, wenn dieser einen vorbestimmten Schaltschwellwert erreicht oder unterschreitet. Vorliegend ist der vorbestimmte Schaltschwellwert 0 A, der zum Zeitpunkt $t_2$ (siehe zweiter Graph 52) erreicht wird.

Anschließend wird beispielsweise eine Eingangsspannung an der Rotorwicklung 14 umgepolt. Dies hat zur Folge, dass der Rotorstrom $I_R(t)$ in entgegengesetzter Richtung (im Vergleich zum Zeitintervall zwischen $t_0$ und $t_1$) fließt und ansteigt. Daraufhin wird der Rotorstrom $I_R(t)$ der Rotorwicklung 14 in Abhängigkeit eines vorbestimmten Schwellwerts $I_L$ (siehe zweiter Graph 52) begrenzt. Insbesondere wird der Rotorstrom auf einen konstanten oder zeitlich variablen, insbesondere drehzahlabhängigen, Wert begrenzt oder geregelt. In Fig. 4 ist in dem zweiten Graph 52 ab dem Zeitpunkt $t_2$ dargestellt, dass der Rotorstrom $I_R(t)$ nach der Umpolung auf bis zu -20A ansteigt (entspricht insbesondere dem vorbestimmten Schwellwert $I_L$) und auf diesen Wert begrenzt wird. Beispielsweise wird die Begrenzung in der in Fig. 3A gezeigten Ausführungsform mittels eines abwechselnden gegengleichen Versetzens eines vierten Halbleiterbauelements T4 (siehe Fig. 3A, 3B, 3C) und eines fünften Halbleiterbauelements T5 (siehe Fig. 3A, 3B, 3C) in einen leitenden Zustand und in einen nicht-leitenden Zustand in Abhängigkeit des vorbestimmten Schwellwerts $I_L$ für den Rotorstrom $I_R(t)$ durchgeführt.

Nachdem die Eingangsspannung an der Rotorwicklung 14 umgepolt wurde (siehe oben), wird beispielsweise auf einen Ablauf eines vorbestimmten Zeitraums gewartet (Zeitintervall zwischen $t_2$ und $t_3$). Der vorbestimmte Zeitraum beträgt insbesondere bis zu 2 ms oder bis zu 3 ms. Es sei angemerkt, dass das Abwarten dieses Zeitraums nicht zwingend notwendig ist. Während dieses vorbestimmten Zeitraums ist das erste Halbleiterbauelement T1 (siehe Fig. 2A, 2B, 2C, 3A, 3B, 3C) sowohl in der Ausführungsform der Fig. 2A, 2B und 2C als auch in der Ausführungsform der Fig. 3A, 3B und 3C vorzugsweise in einem nicht-leitenden Zustand. Nach dem Ablauf des vorbestimmten Zeitraums, zum Zeitpunkt $t_3$, wird der Statorstrom $I_s(t)$ durch die Statorwicklung 12 in Abhängigkeit der aktuellen Drehzahl n(t) des Elektromotors 7, insbesondere mit einen Absinken der aktuellen Drehzahl n(t), erhöht. Dies geschieht in dem Zeitintervall zwischen den Zeitpunkten $t_3$ und $t_4$ in dem dritten Graph 53 der Fig. 4. Dies hat vorteilhaft eine Erhöhung des Bremsmoments, mit dem der Rotor abgebremst wird, zur Folge.

Mit anderen Worten bleibt beispielsweise im ersten Moment nach der Durchführung der Umpolung der Eingangsspannung an der Rotorwicklung 14 das erste Halbleiterbauelement T1 in einem nicht-leitenden Zustand. Dies hat zur Folge, dass die Statorwicklung 12 unbestromt bleibt und somit nicht mit dem Rotorstrom $I_R(t)$ ansteigt, der nach der Umpolung aufgrund der Umpolung ansteigt. Nach Ablauf des vorbestimmten Zeitraums, welcher beispielsweise bis zu 2 ms oder bis zu 3 ms beträgt, wird das erste Halbleiterbauelement T1 in einen leitenden Zustand versetzt. Dadurch wird die Statorwicklung 12 bestromt und kann beispielsweise mit einem Absinken der aktuellen Drehzahl n(t) des Elektromotors 7 kontrolliert erhöht werden (siehe das Zeitintervall zwischen den Zeitpunkten $t_3$ und $t_4$ in dem dritten Graph 53 der Fig. 4). Durch diese Maßnahme können der Rotor- und der Statorstrom $I_R(t)$, $I_S(t)$ des Elektromotors 7 unabhängig voneinander eingestellt werden.

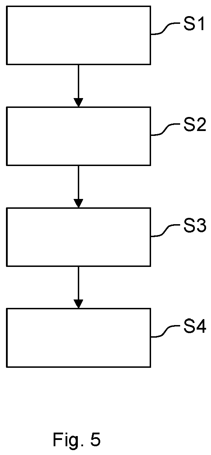

Fig. 5 zeigt ein schematisches Blockschaltbild eines Steuerverfahrens zum Abbremsen eines Elektromotors 7 (siehe Fig .1, 2A, 2B, 2C, 3A, 3B, 3C), beispielsweise des Elektromotors 7 der elektrischen Handwerkzeugmaschine 1 gemäß Fig. 1.

Der Elektromotor 7 umfasst eine Statorwicklung 12 (siehe Fig. 2A, 2B, 2C, 3A, 3B, 3C) und eine Rotorwicklung 14 (siehe Fig. 2A, 2B, 2C, 3A, 3B, 3C). Das Steuerverfahren in Fig. 5 weist vier Schritte S1 - S4 auf. In einem ersten Schritt S1 wird der Elektromotor 7 von einem Motorbetrieb in einen Bremsbetrieb geschaltet (siehe Fig. 4, Zeitpunkt $t_1$). In einem zweiten Schritt S2 wird eine an der Rotorwicklung 14 anliegende Eingangsspannung im Vergleich zum Motorbetrieb umgepolt (siehe Fig. 4, Zeitpunkt $t_2$). In einem dritten Schritt S3 wird ein Rotorstrom $I_R(t)$ (siehe Fig. 4) der Rotorwicklung 14 in Abhängigkeit eines vorbestimmten Schwellwerts $I_L$ (siehe Fig. 4) begrenzt (siehe das Zeitintervall zwischen den Zeitpunkten $t_2$ und $t_4$ in dem zweiten Graph 52 der Fig. 4). In einem vierten Schritt S4 wird ein Statorstrom Is(t) (siehe Fig. 4) der Statorwicklung 12 in Abhängigkeit einer aktuellen Drehzahl n(t) (siehe Fig. 4) des Elektromotors 7 geregelt (siehe das Zeitintervall zwischen den Zeitpunkten $t_3$ und $t_4$ in dem dritten Graph 53 der Fig. 4). Wenn die Drehzahl n(t) des Elektromotors 7 einen vorbestimmten Schwellwert erreicht hat, wird der Elektromotor 7 vorzugsweise komplett von der Energiequelle 2 getrennt. Beispielsweise werden hierzu alle Halbleiterbauelemente in den nicht-leitenden Zustand versetzt.

Das Steuerverfahren wird beispielsweise durchgeführt, wenn ein vorbestimmter Betriebszustand der elektrischen Handwerkzeugmaschine 1 während des Motorbetriebs des Elektromotors 7 erfasst wird. Wenn dieser vorbestimmte Betriebszustand erfasst wurde, werden die Schritte S1 bis S4 durchgeführt.

BEZUGSZEICHENLISTE

| 1 | elektrische Handwerkzeugmaschine |
|---|---|
| 2 | Energiequelle |
| 3 | Werkzeugaufnahme |
| 4 | Ansteuerschaltung |
| 5 | Bohrwerkzeug |
| 6 | Anschlusseinheit |
| 7 | Elektromotor |
| 8 | Anschlusseinheit |
| 9 | Handgriff |
| 10 | Knoten |
| 11 | Taster |
| 12 | Statorwicklung |
| 13 | Leitungsanordnung |
| 14 | Rotorwicklung |
| 15 | Anschlussterminal |
| 16 | Knoten |
| 17 | Stecker |
| 18 | Knoten |
| 19 | Gleichrichter |
| 20 | Knoten |
| 22 | Knoten |

| 51 | Graph |
|---|---|
| 52 | Graph |
| 53 | Graph |
| 100 | elektrische Antriebseinheit |

| A | Pfeil |
|---|---|
| B | Pfeil |
| $I_L$ | Schwellwert |
| $I_R(t)$ | Rotorstrom |
| $I_S(t)$ | Statorstrom |
| $n(t)$ | Drehzahl |
| S1 - S4 | Verfahrensschritte |
| t | Zeit |
| $t_0$ | Zeitpunkt |
| $t_1$ | Zeitpunkt |
| $t_2$ | Zeitpunkt |
| $t_3$ | Zeitpunkt |
| $t_4$ | Zeitpunkt |
| T1 | Halbleiterbauelement |
| T1D | Freilaufdiode |
| T2 | Halbleiterbauelement |
| T2D | Freilaufdiode |
| T3 | Halbleiterbauelement |
| T3D | Freilaufdiode |
| T4 | leitfähiges Bauelement |
| T4D | Freilaufdiode |
| T5 | Halbleiterbauelement |
| T5D | Freilaufdiode |

**Patentansprüche**

1. Steuerverfahren zum Abbremsen eines Elektromotors (7) einer elektrischen Handwerkzeugmaschine (1), der Elektromotor (7) umfassend eine Statorwicklung (12) und eine Rotorwicklung (14), wobei das Verfahren umfasst:

   a) Schalten (S1) des Elektromotors (7) von einem Motorbetrieb in einen Bremsbetrieb,
   b) Umpolen (S2) einer an der Rotorwicklung (14) anliegenden Eingangsspannung im Vergleich zum Motorbetrieb,
   c) Begrenzen (S3) eines Rotorstroms ($I_R(t)$) der Rotorwicklung (14) in Abhängigkeit eines vorbestimmten Schwellwerts ($I_L$), und
   d) Regeln (S4) eines Statorstroms ($I_S(t)$) der Statorwicklung (12) in Abhängigkeit einer aktuellen Drehzahl ($n(t)$) des Elektromotors (7).

2. Steuerverfahren nach Anspruch 1, **dadurch gekennzeichnet, dass** Schritt b) durchgeführt wird, sobald der Rotorstrom ($I_R(t)$) einen vorbestimmten Schaltschwellwert erreicht oder unterschreitet.

3. Steuerverfahren nach Anspruch 2, **dadurch gekennzeichnet, dass** der vorbestimmte Schaltschwellwert 0 A ist.

4. Steuerverfahren nach einem der Ansprüche 1 - 3, **dadurch gekennzeichnet, dass** Schritt b) ferner umfasst: Schalten der Rotorwicklung (14) parallel zu der Statorwicklung (12).

5. Steuerverfahren nach einem der Ansprüche 1 - 4, **dadurch gekennzeichnet, dass** Schritt d) umfasst: Erhöhen des Statorstroms ($I_S(t)$) in Abhängigkeit des Rotorstroms ($I_R(t)$) und/oder der aktuellen Drehzahl ($n(t)$) des Elektromotors (7).

6. Steuerverfahren nach einem der Ansprüche 1 - 4, **dadurch gekennzeichnet, dass** Schritt d) nach Ablauf eines vorbestimmten Zeitraums nach dem Durchführen von Schritt b) durchgeführt wird.

7. Steuerverfahren nach einem der Ansprüche 1 - 6, **gekennzeichnet durch**:

   Erfassen eines vorbestimmten Betriebszustands der elektrischen Handwerkzeugmaschine (1) während des Motorbetriebs des Elektromotors (7), und
   Durchführen der Schritte a) - d), wenn der vorbestimmte Betriebszustand erfasst wird.

8. Steuerverfahren nach Anspruch 7, **dadurch gekennzeichnet, dass** der vorbestimmte Betriebszustand zumindest einen Betriebsunterbrechungszustand, insbesondere ein Verkeilen eines Bohrwerkzeugs (5) der elektrischen Handwerkzeugmaschine (1), umfasst.

9. Steuerverfahren nach Anspruch 7 oder 8, ferner umfassend:
   Erfassen des vorbestimmten Betriebszustands mittels eines Sensors, insbesondere mittels eines Gyrosensors, der elektrischen Handwerkzeugmaschine (1).

10. Computerprogrammprodukt, welches Befehle umfasst, die bei der Ausführung des Programms durch einen Computer diesen veranlassen, das Steuerverfahren nach einem der Ansprüche 1 - 9 auszuführen.

11. Steuerverfahren zum Steuern einer elektrischen Antriebseinheit (100) für eine elektrische Handwerkzeugmaschine (1), wobei die elektrische Antriebseinheit (100) einen Elektromotor (7) umfassend eine Statorwicklung (12) und eine Rotorwicklung (14), eine Ansteuerschaltung (4) zum Ansteuern des Elektromotors (7) und eine Anschlusseinheit (6, 8) zum Koppeln einer Energiequelle (2) zum Antreiben des Elektromotors (7) umfasst, wobei die Statorwicklung (12) über einen ersten Knoten (10) mit einer statorseitigen ersten Halbbrücke umfassend ein erstes Halbleiterbauelement (T1) und ein zweites Halbleiterbauelement (T2) verbunden ist und über einen zweiten Knoten (16) mit der Rotorwicklung (14) verbunden ist, wobei die Rotorwicklung (14) mit einem dritten Knoten (18) verbunden ist, der über ein leitfähiges Bauelement (T4) mit der Anschlusseinheit (6, 8) verbunden ist, und wobei die Ansteuerschaltung (4) ein drittes Halbleiterbauelement (T3) umfasst, das über den zweiten Knoten (16) mit der Rotorwicklung (14) und der Statorwicklung (12) verbunden ist und über einen vierten Knoten (20) direkt mit der Anschlusseinheit (6, 8) verbunden ist, wobei das Steuerverfahren umfasst:

   a) Versetzen des ersten Halbleiterbauelements (T1) in einen nicht-leitenden Zustand zum Schalten des Elektromotors (7) von einem Motorbetrieb in einen Bremsbetrieb,
   b) Versetzen des ersten Halbleiterbauelements (T1) und des dritten Halbleiterbauelements (T3) in einen leitenden Zustand zum Umpolen einer an der Rotorwicklung (14) anliegenden Eingangsspannung im Vergleich zum Motorbetrieb,
   c) Versetzen des ersten Halbleiterbauelements (T1) in einen nicht-leitenden Zustand in Abhängigkeit eines vorbestimmten Schwellwerts ($I_L$) für einen Rotorstrom ($I_R(t)$) durch die Rotorwicklung (14), um den Rotorstrom ($I_R(t)$) zu begrenzen, und
   d) Versetzen des ersten Halbleiterbauelements (T1) abwechselnd in einen leitenden Zustand und in einen nicht-leitenden Zustand, um einen Statorstrom ($I_S(t)$) durch die Statorwicklung (12) in Abhängigkeit einer aktuellen Drehzahl (n(t)) des Elektromotors (7) zu regeln.

12. Steuerverfahren zum Steuern einer elektrischen Antriebseinheit (100) für eine elektrische Handwerkzeugmaschine (1), wobei die elektrische Antriebseinheit (100) einen Elektromotor (7) umfassend eine Statorwicklung (12) und eine Rotorwicklung (14), eine Ansteuerschaltung (4) zum Ansteuern des Elektromotors (7) und eine Anschlusseinheit (6, 8) zum Koppeln einer Energiequelle (2) zum Antreiben des Elektromotors (7) umfasst, wobei die Statorwicklung (12) über einen ersten Knoten (10) mit einer statorseitigen ersten Halbbrücke umfassend ein erstes Halbleiterbauelement (T1) und ein zweites Halbleiterbauelement (T2) verbunden ist und über einen zweiten Knoten (16) mit der Rotorwicklung (14) verbunden ist, wobei die Ansteuerschaltung (4) ein drittes Halbleiterbauelement (T3) umfasst, das über den zweiten Knoten (16) mit der Rotorwicklung (14) und der Statorwicklung (12) verbunden ist und über einen vierten Knoten (20) direkt mit der Anschlusseinheit (6, 8) verbunden ist, wobei die Rotorwicklung (14) mit einem dritten Knoten (18) verbunden ist, der über ein viertes Halbleiterbauelement (T4) mit der Anschlusseinheit (6, 8) verbunden ist, und wobei die Ansteuerschaltung (4) ein fünftes Halbleiterbauelement (T5) umfasst, das über den dritten Knoten (18) mit der Rotorwicklung (14) verbunden ist und über einen fünften Knoten (22) direkt mit der Anschlusseinheit (6, 8) verbunden ist, wobei das Steuerverfahren umfasst:

   a) Versetzen des ersten Halbleiterbauelements (T1) und/oder des vierten Halbleiterbauelements (T4) in einen nicht-leitenden Zustand zum Schalten des Elektromotors (7) von einem Motorbetrieb in einen Bremsbetrieb,
   b) Versetzen des dritten Halbleiterbauelements (T3) und des fünften Halbleiterbauelements (T5) in einen leitenden Zustand zum Umpolen einer an der Rotorwicklung (14) anliegenden Eingangsspannung im Vergleich zum Motorbetrieb,

c) Versetzen des vierten Halbleiterbauelements (T4) und des fünften Halbleiterbauelements (T5) in Abhängigkeit eines vorbestimmten Schwellwerts ($I_L$) für einen Rotorstrom ($I_R(t)$) durch die Rotorwicklung (14) abwechselnd gegengleich in einen leitenden Zustand und in einen nicht-leitenden Zustand, um den Rotorstrom ($I_R(t)$) zu begrenzen, und

d) Versetzen des ersten Halbleiterbauelements (T1) abwechselnd in einen leitenden Zustand und in einen nicht-leitenden Zustand, um einen Statorstrom ($I_S(t)$) durch die Statorwicklung (12) in Abhängigkeit einer aktuellen Drehzahl (n(t)) des Elektromotors (7) zu regeln.

**13.** Steuerverfahren nach einem der Ansprüche 11 oder 12, **dadurch gekennzeichnet, dass** die elektrische Antriebseinheit (100) mittels einer Gleichspannungsquelle, einer pulsierenden Gleichspannungsquelle oder einer Wechselspannungsquelle mit einem Gleichrichter (19) betrieben wird.

Fig. 1

Fig. 2A

Fig. 2B

Fig. 2C

Fig. 3A

Fig. 3B

Fig. 3C

Fig. 4

S1

S2

S3

S4

Fig. 5

**Europäisches Patentamt**
**European Patent Office**
**Office européen des brevets**

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

**EP 21 17 4114**

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | DE 43 33 294 A1 (BOSCH GMBH ROBERT [DE]) 6. April 1995 (1995-04-06) | 1-6,10 | INV. H02P25/14 |
| Y | * Spalte 2, Zeile 11 - Zeile 16 * | 7-9 | B25F5/00 |
| | * Spalte 1, Zeile 66 - Spalte 2, Zeile 3 * | | H02P3/10 |
| | * Spalte 3, Zeile 25 - Zeile 28 * | | |
| | * Spalte 2, Zeile 44 - Zeile 47 * | | |
| | * Spalte 3, Zeile 33 - Zeile 36 * | | |
| | * Spalte 3, Zeile 53 - Zeile 62 * | | |
| | * Anspruch 3 * | | |
| | ----- | | |
| Y | EP 3 020 511 A1 (BOSCH GMBH ROBERT [DE]) 18. Mai 2016 (2016-05-18) * Absatz [0044] * | 7-9 | |
| | ----- | | |

**RECHERCHIERTE SACHGEBIETE (IPC)**

H02P
B25H
B25F

### UNVOLLSTÄNDIGE RECHERCHE

Die Recherchenabteilung ist der Auffassung, daß ein oder mehrere Ansprüche, den Vorschriften des EPÜ nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:
**Siehe Ergänzungsblatt C**

| Recherchenort | Abschlußdatum der Recherche | Prüfer |
|---|---|---|
| **München** | **12. Januar 2022** | **Schürle, Patrick** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04E09)

Europäisches
Patentamt

European
Patent Office

Office européen
des brevets

**UNVOLLSTÄNDIGE RECHERCHE
ERGÄNZUNGSBLATT C**

Nummer der Anmeldung

**EP 21 17 4114**

```
Vollständig recherchierbare Ansprüche:
        1-10

Nicht recherchierte Ansprüche:
        11-13

Grund für die Beschränkung der Recherche:

Auf die Aufforderung nach Regel 62a(1) EPÜ hat der Anmelder nicht
geantwortet.
Daher werden die unabhängigen Ansprüche 1 und 10 recherchiert.
```

**ANHANG ZUM EUROPÄISCHEN RECHERCHENBERICHT
ÜBER DIE EUROPÄISCHE PATENTANMELDUNG NR.**

EP 21 17 4114

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2022

| Im Recherchenbericht angeführtes Patentdokument | Datum der Veröffentlichung | Mitglied(er) der Patentfamilie | Datum der Veröffentlichung |
|---|---|---|---|
| DE 4333294 A1 | 06-04-1995 | DE 4333294 A1 | 06-04-1995 |
| | | EP 0721694 A1 | 17-07-1996 |
| | | JP 3432516 B2 | 04-08-2003 |
| | | JP H09503376 A | 31-03-1997 |
| | | US 5789885 A | 04-08-1998 |
| | | WO 9509477 A1 | 06-04-1995 |
| EP 3020511 A1 | 18-05-2016 | CN 105589414 A | 18-05-2016 |
| | | DE 102014223036 A1 | 12-05-2016 |
| | | EP 3020511 A1 | 18-05-2016 |
| | | EP 3020512 A1 | 18-05-2016 |

EPO FORM P0461

Für nähere Einzelheiten zu diesem Anhang : siehe Amtsblatt des Europäischen Patentamts, Nr.12/82